(19) **Europäisches Patentamt / European Patent Office / Office européen des brevets**

(11) **EP 4 098 510 B1**

(12) **EUROPEAN PATENT SPECIFICATION**

(45) Date of publication and mention of the grant of the patent:
**20.05.2026 Bulletin 2026/21**

(21) Application number: **21888198.5**

(22) Date of filing: **09.07.2021**

(51) International Patent Classification (IPC):
**B61L 27/04** (2006.01)   **B60L 13/00** (2006.01)
**B61L 15/00** (2006.01)

(52) Cooperative Patent Classification (CPC):
**B61L 15/0058; B60L 13/003; B61L 15/0062; B61L 27/04;** B60L 2200/26; B61L 15/0072

(86) International application number:
**PCT/CN2021/105358**

(87) International publication number:
**WO 2022/095496 (12.05.2022 Gazette 2022/19)**

(54) **STOP POSITION-BASED PROTECTION METHOD AND SYSTEM FOR ATO-CONTROLLED TRAIN PASSING NEUTRAL SECTION**

STOPPPOSITIONSBASIERTES SCHUTZVERFAHREN UND SYSTEM FÜR ATO-GESTEUERTEN ZUG DURCH EINEN NEUTRALEN ABSCHNITT

PROCÉDÉ ET SYSTÈME DE PROTECTION À BASE DE POSITION D'ARRÊT POUR TRAIN À COMMANDE ATO PASSANT PAR UNE SECTION NEUTRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2020 CN 202011238218**

(43) Date of publication of application:
**07.12.2022 Bulletin 2022/49**

(73) Proprietor: **CRSC Research & Design Institute Group Co., Ltd.**
**Beijing 100070 (CN)**

(72) Inventors:
• **WANG, Jia**
  **Beijing 100070 (CN)**
• **WANG, Qi**
  **Beijing 100070 (CN)**
• **GE, Luming**
  **Beijing 100070 (CN)**

• **BAO, Zhengtang**
  **Beijing 100070 (CN)**
• **SONG, Baodong**
  **Beijing 100070 (CN)**
• **WANG, Peng**
  **Beijing 100070 (CN)**
• **FANG, Fang**
  **Beijing 100070 (CN)**

(74) Representative: **Meissner Bolte Partnerschaft mbB**
**Patentanwälte Rechtsanwälte**
**Postfach 86 06 24**
**81633 München (DE)**

(56) References cited:
WO-A1-2020/192030   CN-A- 102 442 323
CN-A- 105 912 815   CN-A- 107 571 888
CN-A- 109 130 958   CN-A- 109 353 249
CN-A- 109 398 161   CN-A- 110 015 278
CN-A- 110 588 720   CN-B- 109 130 958
JP-A- 2005 119 518

Description

## TECHNICAL FIELD

The present invention relates to the field of track control technologies, and in particular to a stop position-based protection method and system for an ATO-controlled train passing over a neutral section.

## BACKGROUND ART

In the process of railway operation, the train control equipment controls output levels and corresponding comfort levels when a train passes over a neutral section. The driver needs to identify whether the train can pass the neutral section at a current speed according to experience. If it cannot pass, the driver, with reference to the experience, needs to stop the train in advance through manual intervention in a proper position.

The neutral section refers to the non-electric section of the electrified railway. When the train is in the neutral section, the main breaker is turned off, and the train cannot exert traction. If the ATO-controlled train is controlled to automatically pass over the neutral section smoothly, its speed should be as high as required, and then the main breaker of the train is turned on, to exert traction.

In a practical scenario, a stop position may be near the neutral section. If the stop position is close to the entry of the neutral section, after the train starts, its speed may not reach the speed required at the neutral section, causing the train to stop there. Under such a condition, the train may not be able to pass through the neutral section completely, thus affecting the safe operation of the railway.

Because some stop positions may be designed near the neutral section without considering proper distances between the front and rear stop positions and the neutral section, a risk that the ATO-controlled train stops in the neutral section may occur, thus causing the foregoing effect too.

Based on the foregoing scenarios, it is necessary to research a stop position-based protection method for an ATO-controlled train passing over a neutral section, to automatically identity whether the train can pass over the neutral section smoothly at a current speed. If it cannot or the train cannot be guaranteed to not stop in the neutral section, the ATO-controlled train should be stopped at a proper distance to the neutral section, and it should be ensured that the ATO-controlled train can restart normally.

CN 109 130 958 B aims at disclosing an automatic control of a train's phase separation zone wherein, if it is detected that the train has not yet entered a phase separation zone working condition when the train head reaches a starting position, the train is forcibly controlled to enter the working conditions in the phase separation zone. After the rear of the train passes an end position, the train is controlled to return to normal operating condition.

## SUMMARY

The invention is set out in the appended claims.

In the stop position-based protection method and system for an ATO-controlled train passing over a neutral section provided by the present invention, according to relevant information such as the stop position of the ATO-controlled train, the train position and speed information, the information about a distance to an entry of a front neutral section, the neutral section length information, the MA stop position information, the train-front slope information list, and a train-passing-neutral section feature, it is dynamically identified whether the train can pass over the neutral section smoothly. If the automatic neutral section passing condition cannot be satisfied, or the train cannot be guaranteed to not stop in the neutral section, the ATO calculates a stop position of a neutral section with a maximum operating efficiency, to control the train to stop in advance. The ATO calculates the proper distance for the train to stop before the neutral section by using dynamic calculation method, and can ensure that the ATO-controlled train can restart normally.

The stop position, before the neutral section, calculated dynamically by the ATO according to information such as the information about a distance to an entry of a front neutral section, the neutral section length information, the MA stop position information, the train-front slope information list, the starting acceleration, and the train-passing-neutral section feature, needs to ensure that after restarting, the ATO-controlled train can pass over the neutral section at a proper speed.

The ATO dynamically calculates the stop position near the neutral section according to the train-front slope information list and the comfort level control, and when controlling the train to pass the neutral section, performs traction brake level control based on the comfort level and the time requirement.

The starting acceleration, the time during which the main breaker is turned off in advance, and the distance required to turn on the main breaker after the neutral section passing that are mentioned in this method can be all configured according to the car model parameter by using a configuration interface, and are stored in the ATO equipment.

Other features and advantages of the present invention are described in the specification, and some of them are apparent from the description, or may be learned by practice of the present invention. The objectives and other advantages of the present invention may be implemented and obtained by the structure described in the specification, claims, and drawings.

**BRIEF DESCRIPTION OF THE DRAWINGS**

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1 is a flowchart of safety protection for neutral section passing.
FIG. 2 shows that a stop position is located before a neutral section.
FIG. 3 shows that a stop position is located after a neutral section.

**DETAILED DESCRIPTION**

In order to make the objectives, technical solutions and advantages of the embodiments of the present invention clearer, the technical solutions in the embodiments of the present invention are clearly and completely described below in conjunction with the drawings in the embodiments of the present invention. Apparently, the described embodiments are some rather than all of the embodiments of the present invention. All other embodiments obtained by a person of ordinary skill in the art on the basis of the embodiments of the present invention without creative efforts shall fall within the protection scope of the present invention.

The present invention provides a stop position-based protection method as defined in claim 1.

When the stop position is determined, the safety protection requirements for the ATO-controlled train to stop automatically are considered, and it is necessary to meet the minimum distance requirement for the ATO-controlled train to restart and pass over the neutral section smoothly, to effectively meet maximum traffic requirements, thereby providing safety protection and control basis for the ATO-controlled train to automatically pass over the neutral section. The protection method is suitable for safety protection and control in urban rail transit and railways with automatic neutral section passing scenarios. ATO refers to the train automatic driving subsystem, and ATO-controlled train refers to the train equipped with the automatic train driving sub-system and controlled by it. The comfort level control refers to the gradual-transition control manner taking into account the comfort feeling of passengers to obtain the comfort level. The comfort level refers to the level that considers the comfort output. The neutral section passing condition refers to that the minimum speed at which the train passes through an exit of the neutral section is higher than 45km/h, to ensure that the train tail passes through the neutral section smoothly.

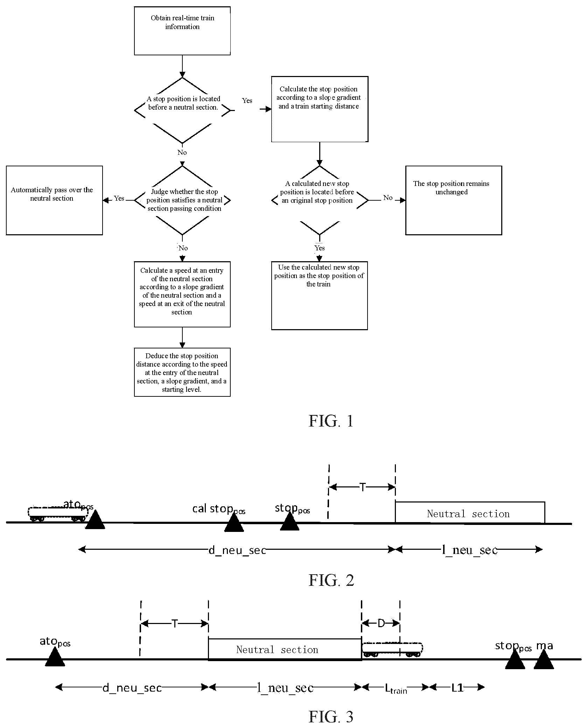

FIG. 1 shows a flowchart of safety protection for neutral section passing. The specific solution is as follows: The real-time train information includes train position and speed information, information about a distance to an entry of a front neutral section, neutral section length information, MA stop position information, the train-front slope information list, and the train-passing-neutral section feature. The neutral section information includes the information about a distance to an entry of a front neutral section and the neutral section length information. The MA refers to a permitted driving distance.

The train-front slope information list is from the permitted driving distance MA of line data, and includes a start position, a length, and a size that are of a slope. It is judged, according to the stop position, that the neutral section passing condition is satisfied.

1) The stop position is located before the neutral section.

As shown in FIG. 2, if the stop position $d_{stoppos}$ of the train is located before the neutral section, the stop position needs to be verified, to judge whether the train can pass over the neutral section completely when the train starts from the stop position, where when the train starts, the train speed starts to increase from 0.

A new stop position $d_{cal\,stoppos}$ is calculated according to the neutral section information, the train-front slope information list, and a train starting distance, the calculated new stop position $d_{cal\,stoppos}$ is compared with the original stop position $d_{stoppos}$, and if the new stop position $d_{cal\,stoppos}$ is before $d_{stoppos}$, the stop position is updated as $d_{cal\,stoppos}$. If the new stop position $d_{cal\,stoppos}$ is after the $d_{stoppos}$, the stop position is not updated as the stop position $d_{stoppos}$. The train starting distance refers to the distance that allows the train to pass the neutral section a smoothly after the fixed starting level is applied.

The new stop position $d_{cal\,stoppos}$ is calculated in a dynamic manner as follows: an neutral-section-entry minimum speed is calculated first, it can be known that according to the neutral section information, a neutral-section-exit minimum speed $V\,exit\,neu\,sec$ cannot be lower than a predetermined speed, and then the train-front slope information list ramp, the neutral section length $l\_neu\_sec,$ and a distance $D$ (a configuration parameter) required to turn on a main breaker after the neutral section passing are obtained in real time to deduce the neutral-section-entry minimum speed. Due to the large difference in the slope information of the neutral sections, the neutral-section-entry minimum speeds $V\_enter\_neu\_sec$ are different. Taking the neutral section without braking as an example, the neutral-section-entry minimum speed $V\_enter\_neu\_sec$ is expressed by using the following formula:

$$V\_enter\_neu\_sec = \sqrt{V\_exit\_neu\_sec^2 - 2 * a_{ramp} * (l\_neu\_sec + D)}$$

where $a_{ramp}$ is a slope equivalent acceleration. The slope information of the neutral section specifically refers to the slope gradient in the neutral section. The gradient of the neutral section can be calculated from the line gradient in the train-front slope information list and neutral section information or collected from the ATP system. The predetermined speed is preferably 45 km/h.

Because the main breaker needs to be turned off in advance before the neutral section passing, before the main breaker is turned off, a train speed $V\_enter\_neu\_sec'$ is calculated by using the following formula

$$V\_enter\_neu\_sec' = V\_enter\_neu\_sec + a_{ramp}T,$$

where
T is the time during which the main breaker is turned off in advance, and can be configured according to the configuration parameter $TC\_T\_IND\_MS\_OFF\_TRA$ in the urban rail transit or railway operating vehicle file. The configuration parameter $TC\_T\_IND\_MS\_OFF\_TRA$ refers to the time, after the ATP sends a command to the train to turn off the main breaker, before the train passes over the neutral section. For example, the time T during which a main breaker is turned off in advance in urban rail transit is 3s, while that in the railway is 10s. The urban rail transit refers to the subway, the light rail or tram, and the like, and the railway refers to the ordinary-speed railway or high-speed railway.

When the train enters the neutral section, the traction condition is directly transferred to the coasting condition, which is likely to cause a great impact. Therefore, in the case of considering the comfort level, N seconds (N<=T) before the main breaker is turned off, the comfort level is adjusted by using the following formula:

$$level_{jerk} = \frac{N}{T} * (level_{max})$$

where $level_{jerk}$ represents the comfort level; $level_{max}$ represents a train maximum-output level. The output level refers to an actual output level of the train. The train parameter file includes a vehicle delay, a train maximum output level, a train minimum output level, a traction speed curve, a braking speed curve, and the like.

According to the comfort level, a comfort level acceleration $a_{jerk}$ corresponding to the comfort level is determined, thereby calculating, by using the following formula, a walking distance $a_{jerk}$ adjusted based on the comfort level:

$$V_{jerk} = V\_enter\_neu\_sec + a_{jerk}T \text{ and}$$

$$d_{jerk} = (V\_enter\_neu\_sec'^2 - V_{jerk}^2)/(2*a_{jerk}),$$

where $V_{jerk}$ represents the train speed after the comfort level is adjusted. The comfort level acceleration $a_{jerk}$ refers to the acceleration corresponding to a different comfort level, and is obtained from the train parameter file.

A starting acceleration $a_{tacc}$ is calculated by using the following formula:

$$a_{tacc} = \bar{a} + a_{ramp}$$

where $\bar{a}$ represents a fixed starting acceleration. The fixed starting acceleration $\bar{a}$ is known information, and is an acceleration corresponding to a different fixed starting acceleration. The fixed takeoff level is a fixed value configured according to the train parameters. The current gradient information refers to the gradient under the current train position. The slope equivalent acceleration a ramp is obtained based on the current gradient information in the train-front slope information list. The fixed takeoff level refers to the fixed level outputted by the train, and is obtained according to the train parameter file.

A distance $d_1$, by which the train starts running and accelerates at a minimum speed corresponding to the comfort level to reach the neutral section, is calculated by using the following formula:

$$d_1 = V_{jerk}^2/(2*a_{tacc})$$

Finally, the train starting distance is obtained as $d=d_1+d_{jerk}$, thereby obtaining the new stop position $d_{cal\ stoppos}$. The distance between the new stop position $d_{cal\ stoppos}$ and the entry of the neutral section is the train starting distance $d$.

2) The stop position is located after the neutral section.

As shown in FIG. 3, an exit position of the neutral section is calculated according to a distance to an entry of a front neutral section and a neutral section length, if the stop position $d_{stoppos}$ of the train is located after the neutral section. The stop position should fully ensure that a train tail passes over an end position of the neutral section. According to the foregoing information, the stop position of the ATO-controlled train needs to satisfy the following condition:

$$d_{stop_{pos}} \geq d_{ato_{pos}} + d\_neu\_sec + l\_neu\_sec + D + L1 + L_{train},$$

where $d_{stoppos}$ is the stop position, and $d_{stoppos} = d\_MA - L2$, $L2$ is a configuration value, that is, a configuration parameter of a distance at which the ATO-controlled train stops before MA, and is preferably 25 m. When controlling the train to drive, the ATO leaves a margin and cannot control it according to the strictest target, that is, the MA, the $d\_MA$ is the position of MA. $L1$ represents a protection distance, $d\_neu\_sec$ represents the distance to the entry of the front neutral section, $l\_neu\_sec$ represents the neutral section length, D represents a distance required to turn on a main breaker after the neutral section passing, $L_{train}$ represents a train length, and $d_{atopos}$ represents a current position of the train.

If it is determined that the ATO-controlled train cannot satisfy the neutral section condition, it is necessary to determine the stop position of the ATO-controlled train (which stops before the neutral region). The position can meet the train starting distance. After the train starts, the acceleration of the train through this distance can meet the minimum speed at the entry of the neutral section. At this speed, it can be ensured that the train is completely out of the neutral section under the coasting condition while being affected by the slope. The design of the stop position may refer to the above method, and the manner of calculating the stop position when it is before the neutral section. The neutral-section-entry minimum speed is deduced according to the speed at the exit of the neutral section and the slope information of the neutral section. The stop position is calculated by considering the starting acceleration and the train-front slope information list.

At present, in design solutions, manufacturers consider the neutral section and the stop position of the ATO-controlled train. Moreover, the protection mechanism is designed based on the experience values. Although these solutions can protect and control neutral section to some extent, the operation efficiency is affected, and the parameter needs to adjusted according to the trains and lines, and therefore these solutions are not universal.

Based on the foregoing stop position-based protection method for an ATO-controlled train passing over a neutral section, the present invention further provides a stop position-based protection system for an ATO-controlled train passing over a neutral section carrying out the method.

The determining unit is specifically configured to:

verify the stop position if the stop position $d_{stoppos}$ of the train is located before the neutral section, to judge whether the train can pass over the neutral section completely when the train starts from the stop position; and

A new stop position $d_{cal\ stoppos}$ is calculated according to the neutral section information, the train-front slope information list, and a train starting distance, the calculated new stop position $d_{cal\ stoppos}$ is compared with the original stop position $d_{stoppos}$, and if the new stop position $d_{cal\ stoppos}$ is before $d_{stoppos}$, the stop position is updated as $d_{cal\ stoppos}$.

The determining unit is specifically configured to:

calculate an exit position of the neutral section according to a distance to an entry of a front neutral section and a neutral section length, if the stop position $d_{stoppos}$ of the train is located after the neutral section, where the stop position should fully ensure that a train tail passes over an end position of the neutral section, and the stop position of the ATO-controlled train needs to satisfy the following condition:

$$d_{stop_{pos}} \geq d_{ato_{pos}} + d\_neu\_sec + l\_neu\_sec + D + L1 + L_{train},$$

where $d_{stoppos}$ represents the stop position, $d_{stoppos} = d\_MA - L2$, $L2$ represents a configuration value, that is, a configuration parameter of a distance at which the ATO-controlled train stops before MA, and is preferably 25 m, $d\_MA$ represents a position where the MA is located, $L1$ represents a protection distance, $d\_neu\_sec$ represents the distance to the entry of the front neutral section, *l_neu_sec* represents the neutral section length, D represents a distance required to turn on a main breaker after the neutral section passing, $L_{train}$ represents a train length, and $d_{atopos}$ represents a current position of the train.

In the stop position-based protection method and system for an ATO-controlled train passing over a neutral section provided by the present invention, according to relevant information such as the stop position of the ATO-controlled train, the train position and speed information, the information about a distance to an entry of a front neutral section, the neutral section length information, the MA stop position information, the train-front slope information list, and a train-passing-neutral section feature, it is dynamically identified whether the train can pass over the neutral section smoothly. If the automatic neutral section passing condition cannot be satisfied, or the train cannot be guaranteed to not stop in the neutral section, the ATO calculates a stop position of a neutral section with a maximum operating efficiency, to control the train to stop in advance. The ATO calculates the proper distance for the train to stop before the neutral section by using dynamic calculation method, and can ensure that the ATO-controlled train can restart normally.

The stop position, before the neutral section, calculated dynamically by the ATO according to information such as the information about a distance to an entry of a front neutral section, the neutral section length information, the MA stop position information, the train-front slope information list, the starting acceleration, and the train-passing-neutral section feature, needs to ensure that after restarting, the ATO-controlled train can pass over the neutral section at a proper speed.

The ATO dynamically calculates the stop position near the neutral section according to the train-front slope information list and the comfort level control, and when controlling the train to pass the neutral section, performs traction brake level control based on the comfort level and the time requirement.

The starting acceleration, the time during which the main breaker is turned off in advance, and the distance required to turn on the main breaker after the neutral section passing that are mentioned in this method can be all configured according to the car model parameter by using a configuration interface, and are stored in the ATO equipment.

Although the invention has been described in detail with respect to the previously described embodiments, it should be appreciated by one skilled in art, the technical solutions recorded in the embodiments may be still modified, or part of its technical features may be modified. The scope of the invention is defined only by the appended claims.

**Claims**

1.  A stop position-based protection method for an ATO-controlled train passing over a neutral section comprising:

    step 1: obtaining real-time train information including a permitted driving distance MA defining an original stop position and slope information for the permitted driving distance;
    step 2: judging whether the original stop position of the ATO-controlled train is located before the neutral section:

    if yes, calculate a new stop position according to a slope gradient of the neutral section and a slope gradient of a section between the original stop position and the neutral section, and a train starting distance, wherein the train starting distance is the distance necessary for the train to accelerate from stopped to a minimum entry speed of the neutral section with a predetermined starting acceleration; and determining if the new stop position is located before the original stop position, if it is, use the new stop position as a stop position of the train;
    if, according to step 2, the original stop position is not located before the neutral section, judge whether the original stop position satisfies a passing condition of the neutral section, the passing condition ensuring that the train tail can fully pass over an end position of the neutral section:
    if yes, automatically pass over the neutral section, and if no calculate a minimum speed at an entry of the neutral section according to the slope gradient of the neutral section and a minimum speed at an exit of the neutral section, and further deduce the new stop position before the neutral section according to the minimum speed at the entry of the neutral section, a slope gradient from the slope information, and the starting distance.

2.  The stop position-based protection method for an ATO-controlled train passing over a neutral section according to claim 1, **characterized in that**, the real-time train information comprises train position and speed information, information about a distance to an entry of a front neutral section, neutral section length information, MA stop position information, and the train-front slope information list.

3.  A stop position-based protection system for an ATO-controlled train passing over a neutral section configured to carry out the method of claim 1.

**4.** The stop position-based protection system for an ATO-controlled train passing over a neutral section according to claim 3, **characterized in that**, the real-time train information comprises train position and speed information, information about a distance to an entry of a front neutral section, neutral section length information, MA stop position information, and the train-front slope information list.

**Patentansprüche**

**1.** Auf einer Halteposition basierendes Schutzverfahren für einen ATO-gesteuerten Zug, der über einen neutralen Abschnitt fährt, umfassend:

Schritt 1: Erhalten von Echtzeit-Zuginformationen, einschließlich einer zulässigen Fahrstrecke MA, die eine ursprüngliche Halteposition definiert, und Neigungsinformationen für die zulässige Fahrstrecke;

Schritt 2: Beurteilen, ob sich die ursprüngliche Halteposition des ATO-gesteuerten Zuges vor dem neutralen Abschnitt befindet:

falls ja, Berechnen einer neuen Halteposition gemäß einem Neigungsgrad des neutralen Abschnitts und einem Neigungsgrad eines Abschnitts zwischen der ursprünglichen Halteposition und dem neutralen Abschnitt und einer Zugstartstrecke, wobei die Zugstartstrecke die Strecke ist, die erforderlich ist, damit der Zug vom Halt auf eine Mindesteinfahrgeschwindigkeit für den neutralen Abschnitt mit einer vorbestimmten Startbeschleunigung beschleunigt; und Bestimmen, ob sich die neue Halteposition vor der ursprünglichen Halteposition befindet, und falls ja, Verwenden der neuen Halteposition als eine Halteposition des Zuges;

falls sich die ursprüngliche Halteposition gemäß Schritt 2 nicht vor dem neutralen Abschnitt befindet, Beurteilen, ob die ursprüngliche Halteposition eine Passierbedingung des neutralen Abschnitts erfüllt, wobei die Passierbedingung sicherstellt, dass das Zugende eine Endposition des neutralen Abschnitts vollständig passieren kann:

falls ja, automatisches Passieren des neutralen Abschnitts und falls nein, Berechnen einer Mindestgeschwindigkeit bei einer Einfahrt in den neutralen Abschnitt gemäß dem Neigungsgrad des neutralen Abschnitts und einer Mindestgeschwindigkeit bei einer Ausfahrt aus dem neutralen Abschnitt und ferner Ableiten der neuen Halteposition vor dem neutralen Abschnitt gemäß der Mindestgeschwindigkeit bei der Einfahrt in den neutralen Abschnitt, einem Neigungsgrad aus den Neigungsinformationen und der Startstrecke.

**2.** Auf einer Halteposition basierendes Schutzverfahren für einen ATO-gesteuerten Zug, der einen neutralen Abschnitt nach Anspruch 1 passiert, **dadurch gekennzeichnet, dass** die Echtzeit-Zuginformationen Zugpositions- und -geschwindigkeitsinformationen, Informationen über eine Strecke zu einer Einfahrt in einen vorderen neutralen Abschnitt, Längeninformationen des neutralen Abschnitts, MA-Haltepositionsinformationen und die Informationsliste über die Neigung vor dem Zug umfassen.

**3.** Auf einer Halteposition basierendes Schutzsystem für einen ATO-gesteuerten Zug, der einen neutralen Abschnitt passiert, das dazu konfiguriert ist, das Verfahren nach Anspruch 1 auszuführen.

**4.** Auf einer Halteposition basierendes Schutzsystem für einen ATO-gesteuerten Zug, der einen neutralen Abschnitt nach Anspruch 3 passiert, **dadurch gekennzeichnet, dass** die Echtzeit-Zuginformationen Zugpositions- und -geschwindigkeitsinformationen, Informationen über eine Strecke zu einer Einfahrt in einen vorderen neutralen Abschnitt, Längeninformationen des neutralen Abschnitts, MA-Haltepositionsinformationen und die Informationsliste über die Neigung vor dem Zug umfassen.

**Revendications**

**1.** Procédé de protection basé sur une position d'arrêt pour un train commandé par ATO (Automatic Train Operation pour « conduite automatique des trains ») passant sur une section neutre, comprenant :

étape 1 : l'obtention d'une information de train en temps réel incluant une distance de conduite autorisée MA définissant une position d'arrêt d'origine et une information de pente pour la distance de conduite autorisée ;
étape 2 : le fait de juger si la position d'arrêt d'origine du train commandé par ATO est située avant la section neutre :

si oui, le calcul d'une nouvelle position d'arrêt selon un gradient de pente de la section neutre et selon un gradient de pente d'une section entre la position d'arrêt d'origine et la section neutre, et d'une distance de démarrage de train, dans lequel la distance de démarrage de train est la distance nécessaire pour que le train accélère depuis un état arrêté jusqu'à une vitesse d'entrée minimale de la section neutre avec une accélération de démarrage prédéterminée ; et le fait de déterminer si la nouvelle position d'arrêt est située avant la position d'arrêt d'origine ; si c'est le cas, l'utilisation de la nouvelle position d'arrêt comme position d'arrêt du train ;

si, selon l'étape 2, la position d'arrêt d'origine n'est pas située avant la section neutre, le fait de juger si la position d'arrêt d'origine satisfait une condition de passage de la section neutre, la condition de passage garantissant que l'arrière du train peut passer entièrement au-dessus d'une position d'extrémité de la section neutre :

si oui, le fait de passer automatiquement au-dessus de la section neutre, et si non, le calcul d'une vitesse minimale à une entrée de la section neutre, selon le gradient de pente de la section neutre, et d'une vitesse minimale à une sortie de la section neutre, et le fait de déduire en outre la nouvelle position d'arrêt avant la section neutre, selon la vitesse minimale à l'entrée de la section neutre, un gradient de pente à partir de l'information de pente et de la distance de démarrage.

2. Procédé de protection basé sur une position d'arrêt pour un train commandé par ATO passant sur une section neutre selon la revendication 1, **caractérisé en ce que**, l'information de train en temps réel comprend une information de position et de vitesse de train, une information concernant une distance jusqu'à une entrée d'une section neutre avant, une information de longueur de section neutre, une information de position d'arrêt MA et la liste d'informations de pente avant de train.

3. Système de protection basé sur une position d'arrêt pour un train commandé par ATO passant sur une section neutre, configuré pour mettre en œuvre le procédé de la revendication 1.

4. Système de protection basé sur une position d'arrêt pour un train commandé par ATO passant sur une section neutre selon la revendication 3, **caractérisé en ce que**, l'information de train en temps réel comprend une information de position et de vitesse de train, une information concernant une distance jusqu'à une entrée d'une section neutre avant, une information de longueur de section neutre, une information de position d'arrêt MA et la liste d'informations de pente avant de train.

```
                    ┌─────────────────────┐
                    │ Obtain real-time train │
                    │     information      │
                    └─────────────────────┘
                              │
                              ▼
                         ◇─────────◇                    ┌──────────────────────────┐
                        ◇           ◇                   │ Calculate the stop position │
                       ◇ A stop position ◇    Yes       │ according to a slope gradient│
                       ◇ is located before ◇──────────▶ │ and a train starting distance│
                        ◇ a neutral section ◇           └──────────────────────────┘
                         ◇             ◇                             │
                          ◇───────────◇                             ▼
                              │ No                            ◇──────────◇
                              ▼                              ◇            ◇         ┌─────────────────────┐
┌──────────────────────┐   ◇──────────◇                    ◇ A calculated new ◇  No │ The stop position    │
│ Automatically pass   │ Yes ◇          ◇                  ◇ stop position is ◇────▶│ remains unchanged    │
│ over the neutral     │◀──◇ Judge whether the ◇           ◇ located before an ◇    └─────────────────────┘
│ section              │   ◇ stop position satisfies ◇      ◇ original stop position ◇
└──────────────────────┘   ◇ a neutral section ◇            ◇               ◇
                            ◇ passing condition ◇            ◇─────────────◇
                             ◇             ◇                       │ Yes
                              ◇───────────◇                        ▼
                                  │ No                    ┌─────────────────────┐
                                  ▼                       │ Use the calculated new │
                       ┌──────────────────────┐           │ stop position as the   │
                       │ Calculate a speed at  │           │ stop position of the   │
                       │ an entry of the       │           │ train                  │
                       │ neutral section       │           └─────────────────────┘
                       │ according to a slope  │
                       │ gradient of the       │
                       │ neutral section and a │
                       │ speed at an exit of   │
                       │ the neutral section   │
                       └──────────────────────┘
                                  │
                                  ▼
                       ┌──────────────────────┐
                       │ Deduce the stop       │
                       │ position distance     │
                       │ according to the      │
                       │ speed at the entry of │
                       │ the neutral section,  │
                       │ a slope gradient, and │
                       │ a starting level.     │
                       └──────────────────────┘
```

FIG. 1

FIG. 2

FIG. 3

**EP 4 098 510 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109130958 B